Europäisches Patentamt

European Patent Office

Office européen des brevets

(19)

(11) Veröffentlichungsnummer : **0 121 889**
**B1**

(12) **EUROPÄISCHE PATENTSCHRIFT**

(45) Veröffentlichungstag der Patentschrift :
30.08.89

(21) Anmeldenummer : 84103639.5

(22) Anmeldetag : 03.04.84

(51) Int. Cl.⁴ : **A 47 B 5/04, H 02 B 1/08**

(54) Ablagetisch zum Befestigen an einer vertikalen Wand, insbesondere eines Schaltschrankes.

(30) Priorität : 12.04.83 DE 3313194

(43) Veröffentlichungstag der Anmeldung :
17.10.84 Patentblatt 84/42

(45) Bekanntmachung des Hinweises auf die Patenterteilung : 30.08.89 Patentblatt 89/35

(84) Benannte Vertragsstaaten :
AT BE CH FR GB IT LI LU NL SE

(56) Entgegenhaltungen :
FR–A– 337 311
FR–A– 2 403 911
US–A– 1 852 723
US–A– 1 944 649
US–A– 1 949 017

(73) Patentinhaber : Rittal-Werk Rudolf Loh GmbH & Co.
KG
Auf dem Stützelberg
D-6348 Herborn (DE)

(72) Erfinder : Debus, Jürgen, Ing. grad.
Am Ebersbach 50
D-6344 Dietzhölztal 1 (DE)
Erfinder : Ehrhardt, Claus-Dieter, Ing. grad.
Tannenstrasse 5
D-3257 Springe 2 (DE)

(74) Vertreter : Vogel, Georg
Hermann-Essig-Strasse 35 Postfach 105
D-7141 Schwieberdingen (DE)

## Beschreibung

Die Erfindung betrifft einen Ablagetisch zum Befestigen an einer vertikalen Wand, insbesondere eines Schaltschrankes, bei dem an von der Wand abstehenden Halteleisten eine Ablageplatte mittels zweier Lagerbolzen oder einer Lagerwelle sowie an der Ablageplatte angeformter Lageraugen schwenkbar an der Wand angebracht ist, bei dem in der boxartig ausgebildeten, zur Wand hin offenen Ablageplatte Stützelemente angelenkt sind, die aus einer in die Ablageplatte eingeklappten Ausgangsstellung in eine senkrecht zur Wand stehende Stützstellung ausklappbar sind, in der sie die geneigt stehende Ablageplatte an der Wand abstützen, und bei dem in der Ausgangsstellung die Ablageplatte mit den eingeklappten Stützelementen parallel zur Wand ausgerichtet ist.

Ein Ablagetisch dieser Art, der als Auslageregal für Schuhe verwendet wird, ist aus der US-A 19 44 649 bekannt. Bei diesem bekannten Ablagetisch sind die Stützelemente als einfache Stützen ausgebildet, die mittels Gelenkbolzen drehbar an den Seitenwänden der boxartigen Ablageplatte gelagert sind. Diese Drehverbindung mittels der Gelenkbolzen muß so fest sein, daß sie die eingestellte Stützstellung in Verbindung mit der Abstützfläche der Stützenenden auch sicher einhalten. Daher müssen die Stützen manuell von der eingeklappten Ausgangsstellung in die Stützstellung gebracht werden. Diese Handhabung läßt sich bei einem Ablagetisch vertreten, bei dem die Einstellung in die Stützstellung nur einmal am Einsatzort erfolgt und dann eingehalten bleibt. Außerdem darf die so abgestützte Ablageplatte nicht stark belastet werden, da sich sonst die Ablageplatte in die Ausgangsstellung zurückstellen kann.

Es ist Aufgabe der Erfindung, einen Ablagetisch der eingangs erwähnten Art zu schaffen, der mit einfachen Bauteilen aufgebaut ist, an jeder vertikalen Wand befestigbar ist und aus einer raumsparenden Ausgangsstellung leicht in eine optimale Arbeitsstellung (Stützstellung) gebracht werden kann.

Diese Aufgabe wird nach der Erfindung dadurch gelöst, daß die Stützelemente als boxartige Stützklappe ausgebildet sind, die auf der der Schwenkachse der Ablageplatte gegenüberliegenden Seite der Ablageplatte mittels Lagerbolzen oder einer Lagerwelle sowie angeformter Lageraugen der Ablageplatte und der Stützklappe begrenzt schwenkbar mit der Ablageplatte verbunden ist und daß beim Anheben der Ablageplatte aus der Ausgangsstellung die Stützklappe aufgrund ihres Eigengewichtes die senkrecht zur Wand stehende Stützstellung einnimmt.

Mit Hilfe von jeweils zwei Lagerbolzen oder einer durchgehenden Lagerwelle kann die Ablageplatte an der Wand schwenkbar gelagert und begrenzt schwenkbar mit der Stützklappe verbunden werden. In der Ausgangsstellung ist die Stützklappe an die Unterseite der Ablageplatte angeklappt und die Ablageplatte hängt parallel zu der Wand. Wird die Ablageplatte an der unteren Kante angehoben, kann sich die Stützklappe durch ihr Eigengewicht in die Stützstellung ausklappen. Dabei ist durch Überhub der Ablageplatte der Schwenkbereich für die Stützklappe zu schaffen. Ist die Stützklappe in der Stützstellung, dann wird die Ablageplatte wieder zurückgeschwenkt, bis sich die Stützklappe an der Wand abstützt und die Ablageplatte in der vorgegebenen Arbeitsstellung an der Wand abstützt.

Wird die Stützklappe aus der Stützstellung an die Ablageplatte angeklappt, dann kann die Ablageplatte wieder ihre zur Wand parallele Ausgangsstellung einnehmen.

Nach einer Ausgestaltung ist vorgesehen, daß die Seitenwände der Ablageplatte mittels längs- und quergerichteter Stützwände versteift sind, sowie, daß die Seitenwände der Stützklappe mittels längs- und quergerichteter Stützwände versteift sind.

Die Ablageplatte und die Stützklappe können dann als einfache und dennoch stabile Kunststoff-Spritzgußteile hergestellt werden.

Für die Schwenklagerung der Stützklappe ist nach einer Ausgestaltung vorgesehen, daß die Ablageplatte durch zwei längsgerichtete Stützwände in drei Längsfelder unterteilt ist, daß die Lageraugen für die Lagerbolzen bzw. die Lagerwelle der Stützklappe an diesen längsgerichteten Stützwänden angeformt sind und daß in den parallel dazu verlaufenden Seitenwänden der Ablageplatte fluchtende Lagerbohrungen eingebracht sind. Damit in dem mittleren Feld der Ablageplatte die Stützklappe schwenkbar gelagert werden kann, ist vorgesehen, daß die Stützplatte zwischen den beiden längsgerichteten Stützwänden der Ablageplatte angeordnet ist und daß die quergerichteten Stützwände zwischen diesen beiden längsgerichteten Stützwänden in der Höhe um die Dicke der boxartigen Stützklappe reduziert sind.

Werden zwei Lagerbolzen verwendet, dann ist jeder Lagerbolzen an zwei Stellen der Ablageplatte gelagert und die eingeklappte Stützklappe hat innerhalb der boxartigen Ablageplatte ausreichend Platz. Die Aufnahme der Lagerbolzen bzw. einer durchgehenden Lagerwelle an der Stützklappe ist nach einer Ausgestaltung so gelöst, daß die Lageraugen der Stützklappe an den Außenseiten der Seitenwände geringfügig vorstehen und sich über einen Teil der Breite der Stützklappe erstrecken. Damit hält die Stützklappe zu den angrenzenden längsgerichteten Stützwänden der Ablageplatte einen ausreichenden Abstand, um ohne Beeinträchtigung durch diese Stützwände verschwenkt werden zu können.

Die definierte Stützstellung der Stützklappe wird dadurch garantiert, daß die Seitenwand an der Anlenkseite der Stützklappe so geneigt ist, daß sie beim Ausklappen der Stützklappe sich in der Stützstellung an der Unterseite der Ablageplatte abstützt und daß die gegenüberliegende Seitenwand der Stützklappe über die Oberseite derselben vorsteht und als entsprechend geneigte Stützplatte ausgebildet ist.

Damit bei einer Belastung der so abgestützten Ablageplatte die Stützstellung nicht unbeabsichtigt aufgehoben wird, ist die Ausgestaltung so, daß in der Stützstellung die Stützklappe senkrecht zur Wand steht und die als Stützplatte ausgebildete Seitenwand parallel zu der Wand verläuft.

Damit die an der Wand abgestützte Stützklappe die Wand nicht beschädigt, ist nach einer Ausgestaltung vorgesehen, daß die als Stützplatte verwendete Seitenwand der Stützklappe mit Bohrungen zum Anbringen einer elastischen Pufferplatte versehen ist.

Für die Anlenkung der Ablageplatte in möglichst kleinem Abstand zur Wand ist nach einer Ausgestaltung vorgesehen, daß die Lageraugen für die Lagerwelle bzw. die Lagerbolzen zur Anlenkung der Ablageplatte an der Wand unmittelbar im Anschluß an die zugekehrte Seitenwand angeformt sind, die sich von den an die Anlenkseite anschließenden Seitenwänden jeweils nur über einen Teil der Breite der Ablageplatte erstrecken.

Nach einer weiteren Ausgestaltung ist vorgesehen, daß auch an der Seite der Ablageplatte, an der die Stützklappe angelenkt ist, weitere Lageraugen unmittelbar im Anschluß an die zugekehrte Seitenwand angeformt sind, die sich von den an die Anlenkseite anschließenden Seitenwänden jeweils bis zu der zugekehrten längsgerichteten Stützwand erstrecken.

Diese weiteren Lageraugen können bei einer weiteren Ausgestaltung, die dadurch gekennzeichnet ist, daß mehrere Ablageplatten mit Stützklappen mittels einer durchgehenden Lagerwelle bzw. einzelnen Lagerbolzen an der Wand angelenkt sind, von Vorteil sein, um die aneinandergereihten Ablageplatten dadurch zu stabilisieren, daß die Ablageplatten im Bereich der Anlenkseite der Stützplatten mittels einer in die weiteren Lageraugen eingeschobenen Lagerwelle miteinander verbunden und versteift sind. Eine weitere Möglichkeit ist dadurch gegeben, daß die aneinander liegenden Seitenwände benachbarter Ablageplatten mit Bohrungen für Verbindungsschrauben versehen sind.

Damit die Ablageplatte beim Anklappen an die Wand keine großen Klappgeräusche erzeugt und die Wand nicht beschädigt, ist nach einer weiteren Ausgestaltung vorgesehen, daß vorzugsweise im Bereich der Lageraugen Aufnahmehülsen an die zugekehrten Seitenwände angeformt sind, deren Aufnahmebohrungen senkrecht zur Ablageplattenebene stehen und elastische Pufferelemente aufnehmen.

Ist die Wand aus Metall mit magnetischer Leitfähigkeit, dann kann die Ausgangsstellung der Ablageplatte in einfacher Weise dadurch festgehalten werden, daß im Bereich der Anlenkseite für die Stützklappe an der Seitenwand der Ablageplatte vorzugsweise ein Aufnahmetopf mit einer Aufnahme für einen topfförmigen Dauermagneten angeformt ist.

Damit die auf der in Arbeitsstellung befindlichen Ablageplatte abgelegten Pläne, Zeichnungen oder dgl. nicht abrutschen, sieht eine Ausgestaltung vor, daß die Seite der Ablageplatte, an der die Stützklappe angelenkt ist, auf der Oberseite einen überstehenden Anlagesteg aufweist, der mit seiner Unterseite über die angrenzende Seitenwand als Griffleiste vorsteht. Mit dieser Griffleiste kann die Ablageplatte auch leicht gefaßt und verschwenkt werden.

Ist nach einer weiteren Ausgestaltung vorgesehen, daß die Seite der Ablageplatte, die an der Wand anlenkbar ist, auf der Oberseite mit parallel zur Anlenkseite verlaufenden Ablagestegen bzw. Ablagefächern versehen ist, dann können Bleistifte oder dgl. auf der Ablageplatte abgelegt werden.

Die Ablage von Werkzeugen oder dgl. wird nach einer weiteren Ausgestaltung dadurch ermöglicht, daß im Bereich der Ablagestege bzw. Ablagefächer Bohrungen mit verschieden großen Durchmessern eingebracht sind. Schraubendreher, Steckschlüssel usw. können in diese Bohrungen der Ablageplatte eingesteckt werden.

Die Erfindung wird anhand eines in den Zeichnungen dargestellten Ausführungsbeispiels näher erläutert. Es zeigt:

Fig. 1 in perspektivischer Teilansicht schematisch die Anbringung eines Ablagetisches nach der Erfindung an der Innenseite der Schranktür eines Schaltschrankes,

Fig. 2 eine Teilansicht auf die Unterseite einer Ablageplatte für den Ablagetisch nach Fig. 1, die die Anlenkseite für die Stützklappe erkennen läßt,

Fig. 3 eine Teilansicht auf die Unterseite der Ablageplatte nach Fig. 2 im Bereich der für die Befestigung an der Wand vorgesehenen Anlenkseite,

Fig. 4 einen Querschnitt durch die Ablageplatte entlang der Linie IV-IV der Fig. 2,

Fig. 5 eine Seitenansicht der Ablageplatte auf die Anlenkseite für die Stützklappe,

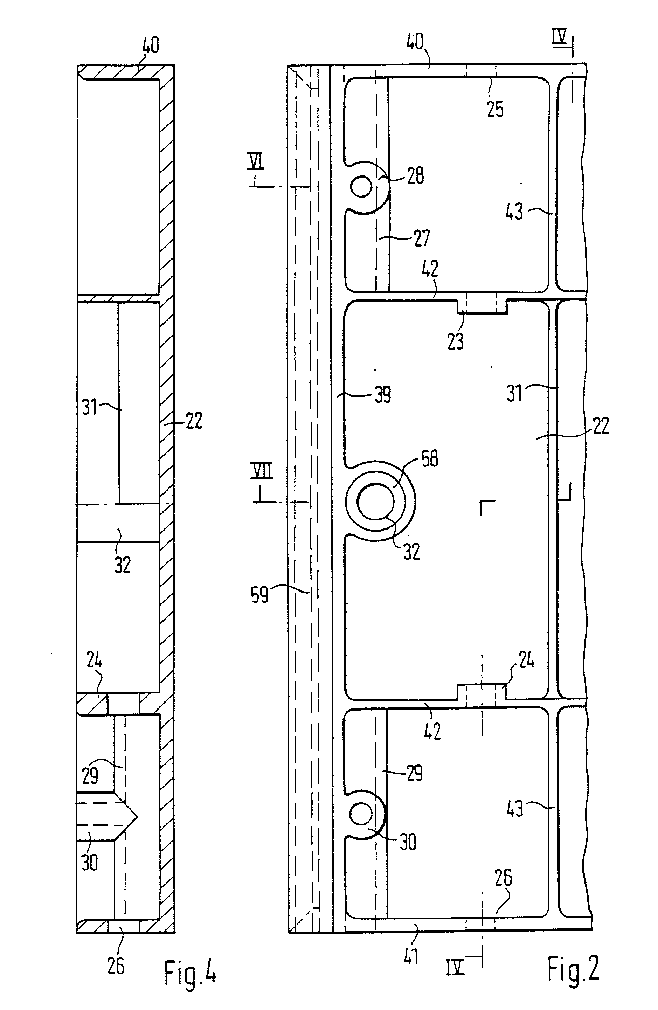

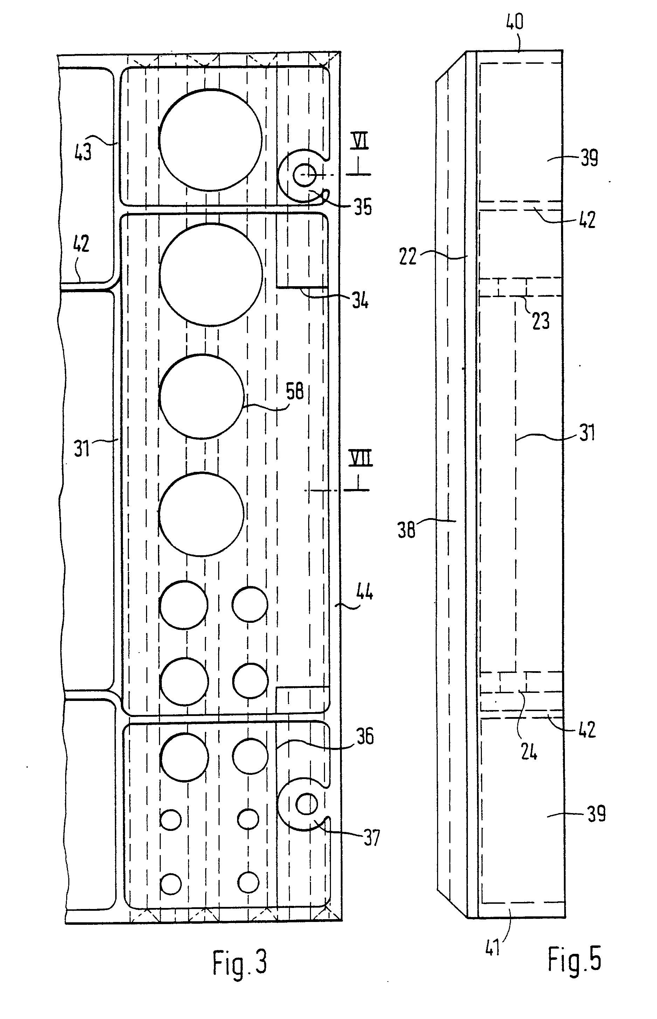

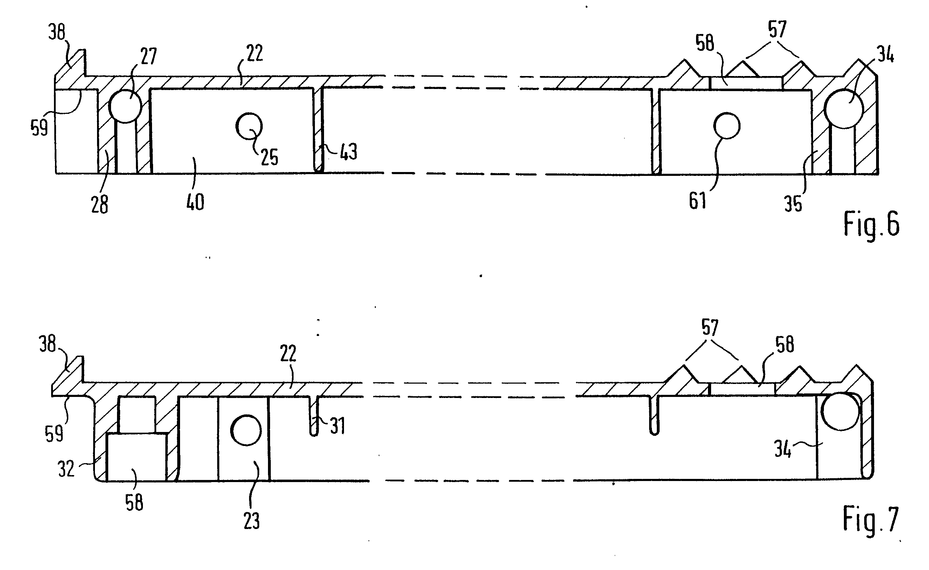

. Fig. 6 einen Längsschnitt durch die Ablageplatte entlang der Linie VI-VI der Fig. 2 und 3,

Fig. 7 einen Längsschnitt durch die Ablageplatte entlang der Linie VII-VII der Fig. 2 und 3,

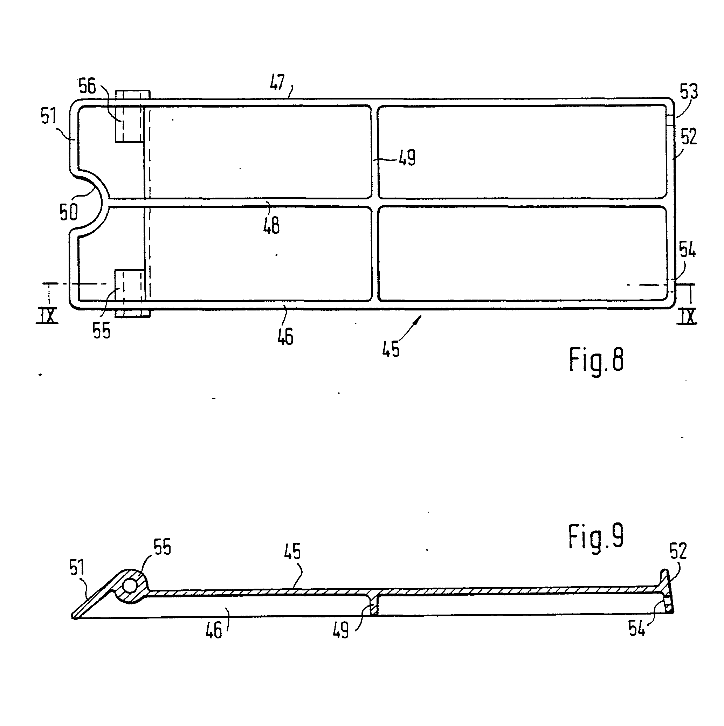

Fig. 8 die Ansicht auf die Unterseite der Stützklappe und

Fig. 9 einen Längsschnitt durch die Stützklappe entlang der Linie IX-IX der Fig. 8.

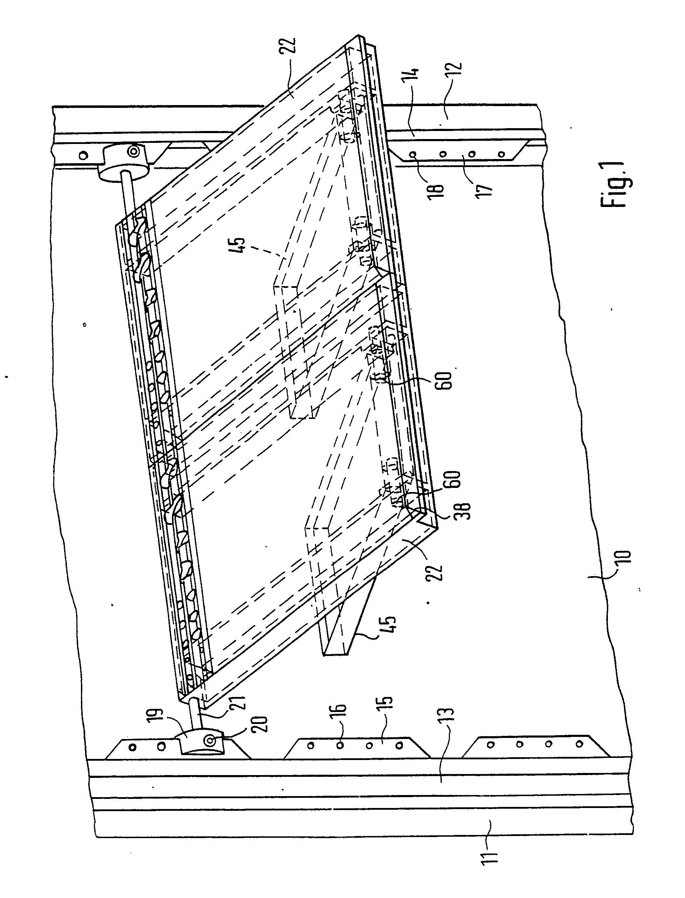

Bei dem in Fig. 1 dargestellten Ausführungsbeispiel sind zwei Ablageplatten 22 nebeneinander als zusammengesetzte Ablageplatte an der Innenseite der als Wand 10 benützten Schranktür eines Schaltschrankes schwenkbar gelagert. Dabei ist eine durchgehende Lagerwelle 21 verwendet, die in noch zu erläuternder Weise mit den Ablageplatten verbunden ist. Die Enden der Lagerwelle 21 ist in Lagerelementen 19 gelagert. Diese Lagerung kann so sein, daß die Lagerwelle 21 frei drehbar oder unverdrehbar gehalten ist. Dies hängt davon ab, ob die Lagerwelle 21 an den Ablageplatten 22 unverdrehbar oder frei drehbar gelagert ist. Die Lagerelemente 19 werden mittels Schrauben 20 an den mit Bohrungen 16 und 18 versehenen Halteleisten 15 und 17 befestigt. Diese Halteleisten 15 und 17 sind Bestandteile von Z-förmigen Versteifungs- und Montageleisten 13 und 14, die innerhalb der Türränder 11 und 12 an der Innenseite der Schranktür befestigt, vorzugsweise angeschweißt sind.

Wie die Fig. 1 weiterhin erkennen läßt, sind an den freien Stellen, die den Anlenkseiten mit der Lagerwelle 21 gegenüberliegen, mittels jeweils zweier Lagerbolzen 60 die Stützklappen 45 an den Ablageplatten 22 angelenkt. Diese Stützklappen 45 sind in der Ausgangsstellung an die Unterseite der Ablageplatten 22 angeklappt und die Ablageplatten 22 verlaufen dabei parallel zu der Wand 10. Werden die Ablageplatten 22 an der Unterkante angehoben, dann klappen die Stützklappen 45 aufgrund ihres Eigengewichtes in die Stützstellung aus, die durch Begrenzung des Schwenkbereiches genau definiert ist. Haben die Stützklappen 45 die Stützstellung eingenommen, dann werden die im Überhub ausgeschwenkten Ablageplatten 22 so weit zurückgeschwenkt, bis sich die Stützklappen 45 an der Wand 10 abstützen. In der Stützstellung stehen die Stützklappen 45 senkrecht zu der Wand 10, damit bei Belastung der Ablageplatten 22 die Stützstellung nicht unbeabsichtigt aufgehoben wird.

Werden die Stützklappen 45 an die Ablageplatten 22 angeklappt, dann können die Ablageplatten 22 wieder in ihre Ausgangsstellung an die Wand 10 angeklappt werden.

In gleicher Weise kann auch eine einzelne Ablageplatte 22 an einer Wand 10 angelenkt und abgestützt werden. Anstelle der durchgehenden Lagerwelle 21 können auch zwei kurze Lagerbolzen zur Schwenklagerung der Ablageplatte 22 verwendet werden.

Die Fig. 2 bis 7 zeigen nun die Ausgestaltung eines Ausführungsbeispiels einer Ablageplatte 22 in Einzelheiten. Die boxartige Ablageplatte 22 hat die Seitenwände 39, 40, 41 und 42, die durch die längsgerichteten Stützwände 42 und die quergerichteten Stützwände 31 und 43 versteift sind. Die beiden längsgerichteten Stützwände 42 teilen den von den Seitenwänden umgrenzten Raum der Ablageplatte 22 in drei Längsfelder. Dabei sind im Bereich der Anlenkseite für die Stützklappe 45 nach Fig. 8 und 9 die längsgerichteten Stützwände 42 mit den Lageraugen 23 und 24 versehen. Die parallel dazu verlaufenden Seitenwände 40 und 41 tragen mit den Lageraugen 23 und 24 fluchtende Lagerbohrungen 25 und 26. Zwischen den beiden längsgerichteten Stützwänden 42 wird die Stützklappe 45 eingebracht, die an den Seitenwänden 46 und 47 angeformte Lageraugen 55 und 56 aufweist. Diese Lageraugen 55 und 56 stehen an den Außenseiten der Seitenwände 46 und 47 etwas ab, damit die Stützklappe 45 frei zwischen den längsgerichteten Stützwänden 42 der Ablageplatte 22 verschwenkt werden kann. Die zwischen den längsgerichteten Stützwänden 42 verlaufenden quergerichteten Stützwände 31 sind in der Höhe um die Stärke der Stützklappe 45 reduziert, so daß sie voll in das Längsfeld der Ablageplatte 22 eingeklappt werden kann.

Die Schwenklagerung der Stützklappe 45 kann mittels zweier Lagerbolzen 60 vorgenommen werden, die einmal in die Lagerbohrung 26 und das Lagerauge 24 der Ablageplatte 22 und in das Lagerauge 55 der Stützklappe 45 und zum anderen in die Lagerbohrung 25 und das Lagerauge 23 der Ablageplatte 22 und in das Lagerauge 56 der Stützklappe 45 eingeschoben werden. Dabei ist die Stützklappe 45 vorzugsweise auf den unverdrehbar in der Ablageplatte 22 festgelegten Lagerbolzen 60 frei drehbar. Anstelle der beiden Lagerbolzen 60 kann auch eine durchgehende Lagerwelle verwendet werden, die sich auch über mehrere, aneinandergereihte Ablageplatten 22 erstrecken kann.

Im Anschluß an die der Anlenkseite zugekehrte Seitenwand 39 können von den Seitenwänden 40 und 41 ausgehende weitere Lageraugen 27 und 29 angeformt sein, die sich jeweils bis zu der zugekehrten längsgerichteten Stützwand 42 erstrecken. Diese weiteren Lageraugen 27 und 29 können Verbindungsbolzen oder eine durchgehende Lagerwelle aufnehmen, um aneinandergereihte Ablageplatten 22 miteinander zu verbinden und zu stabilisieren. Außerdem ist im Bereich dieser Seitenwand 39 ein Aufnahmetopf 32 angeformt, der eine Aufnahme 58 für einen topfartigen Dauermagneten bildet. Der eingesetzte Dauermagnet kann die Ablageplatte 22 in der Ausgangsstellung an der Wand 10 aus Metall festhalten. Die Ablageplatte 22 ist im Bereich der Seitenwand 39 auf der Oberseite mit dem vorstehenden Anlagesteg 38 versehen, der über die Seitenwand 39 hinausragt und die Griffleiste zur Bedienung der Ablageplatte 22 bildet.

An der gegenüberliegenden Anlenkseite sind im Anschluß an die Seitenwand 44 die Lageraugen 34 und 36 angeformt, welche die Lagerwelle 21 oder zwei Lagerbolzen aufnehmen. Die Seitenwände 40 und 41 können in diesem Endbereich mit Bohrungen 61 für Verbindungsschrauben versehen sein, um benachbarte Ablageplatten 22 starr miteinander zu verbinden. Auf der Oberseite trägt die Ablageplatte 22 in diesem Endbereich parallel zur Anlenkseite verlaufende Ablagestege 57, die im Abstand zueinander verlaufen und Ablagefächer begrenzen. Außerdem sind in diesem Bereich der Ablageplatte 22 Bohrungen 58 mit verschieden großen Durchmessern zum Einstecken von Werkzeugen eingebracht.

Die Stützklappe 45 nach Fig. 8 und 9 hat im Bereich der Anlenkseite eine Einbuchtung 50 in der Seitenwand 51, die den Aufnahmetopf 32 der Ablageplatte 22 umschließt. Diese Seitenwand 51 der Stützklappe 45 ist geneigt und bildet einen Begrenzungsanschlag, der beim Anschlag an die Unterseite der Ablageplatte 22 die Ausklappbewegung in der Stützstellung begrenzt. Auch die Stützklappe 45 ist mit ihren Seitenwänden 46, 47, 51 und 52 boxartig ausgebildet und durch die längsgerichtete Stützwand 48 und die quergerichtete Stützwand 49 versteift. Die der Anlenkseite gegenüberliegende Seitenwand 52 der Stützklappe 45 ist so geneigt, daß sie in der Stützstellung parallel zur Wand 10 verläuft.

Sie ist über die Oberseite der Stützklappe 45 hinaus verlängert und als Stützplatte ausgebildet. In der Seitenwand 52 sind Bohrungen 53 und 54 eingebracht, die zur Anbringung einer elastischen Pufferplatte verwendet werden können.

Im Bereich der Lageraugen 27 und 29 bzw. 34 und 36 sind an den Seitenwänden 39 und 44 Aufnahmehülsen 28 und 30 bzw. 35 und 37 angeformt, deren Aufnahmebohrungen senkrecht zur Ablageplattenebene stehen. Diese Aufnahmebohrungen nehmen elastische Pufferelemente auf, die das Anschlaggeräusch der Ablageplatte 22 an der Wand 10 dämpfen und eine Beschädigung der Wand 10 verhindern.

Damit evtl. Toleranzen in den Abständen der für die Lagerelemente 19 vorgesehenen Befestigungsstellen ausgeglichen werden können, sieht eine Ausgestaltung vor, daß in die Aufnahmehülsen Arretierungsschrauben eingeschraubt sind, die die einzelnen Lagerbolzen zur Anlenkung der Ablageplatte(n) an der Wand axial und unverdrehbar in den Lageraugen der Ablageplatte(n) festlegen.

**Patentansprüche**

1. Ablagetisch zum Befestigen an einer vertikalen Wand (10), insbesondere eines Schaltschrankes, bei dem an von der Wand (10) abstehenden Halteleisten (14, 15) eine Ablageplatte (22) mittels zweier Lagerbolzen oder einer Lagerwelle (21) sowie an der Ablageplatte (22) angeformter Lageraugen (34, 36) schwenkbar an der Wand (10) angebracht ist, bei dem in der boxartig ausgebildeten, zur Wand (10) hin offenen Ablageplatte (22) Stützelemente (45) angelenkt sind, die aus einer in die Ablageplatte (20) eingeklappten Ausgangsstellung in eine senkrecht zur Wand stehende Stützstellung ausklappbar sind, in der sie die geneigt stehende Ablageplatte (22) an der Wand (10) abstützen, und bei dem in der Ausgangsstellung die Ablageplatte (22) mit den eingeklappten Stützelementen (45) parallel zur Wand (10) ausgerichtet ist, dadurch gekennzeichnet, daß die Stützelemente als boxartige Stützklappe (45) ausgebildet sind, die auf der der Schwenkachse der Ablageplatte (22) gegenüberliegenden Seite der Ablageplatte (22) mittels Lagerbolzen (60) oder einer Lagerwelle sowie angeformter Lageraugen (23, 24 und 55, 56) der Ablageplatte (22) und der Stützklappe (45) begrenzt schwenkbar mit der Ablageplatte (22) verbunden ist und daß beim Anheben der Ablageplatte (22) aus der Ausgangsstellung die Stützklappe (45) aufgrund ihres Eigengewichtes die senkrecht zur Wand stehende Stützstellung einnimmt.

2. Ablagetisch nach Anspruch 1, dadurch gekennzeichnet, daß die Seitenwände (39, 40, 41, 44) der Ablageplatte (22) mittels längs- und quergerichteter Stützwände (31, 43) versteift sind.

3. Ablagetisch nach Anspruch 1 oder 2, dadurch gekennzeichnet, daß die Seitenwände (46, 47, 51, 52) der Stützklappe (45) mittels längs- und quergerichteter Stützwände (48, 49) versteift sind.

4. Ablagetisch nach einem der Ansprüche 1 bis 3, dadurch gekennzeichnet, daß die Ablageplatte (22) durch zwei längsgerichtete Stützwände (42) in drei Längsfelder unterteilt ist, daß die Lageraugen (23, 24) für die Lagerbolzen (60) bzw. die Lagerwelle der Stützklappe (45) an diesen längsgerichteten Stützwänden (42) angeformt sind und daß in den parallel dazu verlaufenden Seitenwänden (40, 41) der Ablageplatte (22) fluchtende Lagerbohrungen (25, 26) eingebracht sind.

5. Ablagetisch nach Anspruch 4, dadurch gekennzeichnet, daß die Stützklappe (45) zwischen den beiden längsgerichteten Stützwänden (42) der Ablageplatte (22) angeordnet ist und daß die quergerichteten Stützwände (31) zwischen diesen beiden längsgerichteten Stützwänden (42) in der Höhe um die Dicke der boxartigen Stützklappe (45) reduziert sind.

6. Ablagetisch nach einem der Ansprüche 1 bis 5, dadurch gekennzeichnet, daß die Lageraugen (34, 36) für die Lagerwelle (21) bzw. die Lagerbolzen zur Anlenkung der Ablageplatte (22) an der Wand (10) unmittelbar im Anschluß an die zugekehrte Seitenwand (44) angeformt sind, die sich von den an die Anlenkseite anschließenden Seitenwänden (40, 41) jeweils nur über einen Teil der Breite der Ablageplatte (22) erstrecken.

7. Ablagetisch nach einem der Ansprüche 1 bis 6, dadurch gekennzeichnet, daß auch an der Seite der Ablageplatte (22), an der die Stützklappe (45) angelenkt ist, weitere Lageraugen (27, 29) unmittelbar im Anschluß an die zugekehrte Seitenwand (39) angeformt sind, die sich von den an die Anlenkseite anschließenden Seitenwänden (40, 41) jeweils bis zu der zugekehrten längsgerichteten Stützwand (42) erstrecken.

8. Ablagetisch nach einem der Ansprüche 1 bis 7, dadurch gekennzeichnet, daß vorzugsweise im Bereich der Lageraugen (27, 29, 34, 36) Aufnahmehülsen (28, 30, 35, 37) an die zugekehrten Seitenwände (39 bzw. 44) angeformt sind, deren Aufnahmebohrungen senkrecht zur Ablageplattenebene stehen und elastische Pufferelemente aufnehmen.

9. Ablagetisch nach einem der Ansprüche 1 bis 8, dadurch gekennzeichnet, daß im Bereich der Anlenkseite für die Stützklappe (45) an der Seitenwand (39) der Ablageplatte (22) vorzugsweise ein Aufnahmetopf (32) mit einer Aufnahme (58) für einen topfförmigen Dauermagneten angeformt ist.

10. Ablagetisch nach einem der Ansprüche 1 bis 9, dadurch gekennzeichnet, daß die Seite der Ablageplatte (22) an der die Stützklappe (45) angelenkt ist, auf der Oberseite einen überstehenden Anlagesteg (38) aufweist, der mit seiner Unterseite über die angrenzende Seitenwand (39) als Griffleiste (59) vorsteht.

11. Ablagetisch nach einem der Ansprüche 1 bis 10, dadurch gekennzeichnet, daß die Seite der Ablageplatte (22), die an der Wand (10) anlenkbar ist, auf der Oberseite mit parallel zur Anlenkseite verlaufenden Ablagestegen (57) bzw. Ablagefächern versehen ist.

12. Ablagetisch nach Anspruch 11, dadurch gekennzeichnet, daß im Bereich der Ablagestege (57) bzw. Ablagefächer Bohrungen (58) mit verschieden großen Durchmessern eingebracht sind.

13. Ablagetisch nach einem der Ansprüche 1 bis 12, dadurch gekennzeichnet, daß die Lageraugen (55, 56) der Stützklappe (45) an den Außenseiten der Seitenwände (46, 47) geringfügig vorstehen und sich über einen Teil der Breite der Stützklappe (45) erstrecken.

14. Ablagetisch nach einem der Ansprüche 1 bis 13, dadurch gekennzeichnet, daß die Seitenwand (51) an der Anlenkseite der Stützklappe (45) so geneigt ist, daß sie beim Ausklappen der Stützklappe (45) sich in der Stützstellung an der Unterseite der Ablageplatte (22) abstützt und daß die gegenüberliegende Seitenwand (52) der Stützklappe (45) über die Oberseite derselben vorsteht und als entsprechend geneigte Stützplatte ausgebildet ist.

15. Ablagetisch nach einem der Ansprüche 1 bis 14, dadurch gekennzeichnet, daß in der Stützstellung die Stützklappe (45) senkrecht zur Wand (10) steht und die als Stützplatte ausgbildete Seitenwand (52) parallel zu der Wand (10) verläuft.

16. Ablagetisch nach einem der Ansprüche 1 bis 15, dadurch gekennzeichnet, daß die als Stützplatte verwendete Seitenwand (52) der Stützklappe (45) mit Bohrungen (53, 54) zum Anbringen einer elastischen Pufferplatte versehen ist.

17. Ablagetisch nach einem der Ansprüche 1 bis 16, dadurch gekennzeichnet, daß mehrere Ablageplatten (22) mit Stützklappen (45) mittels einer durchgehenden Lagerwelle (21) bzw. einzelner Lagerbolzen an der Wand (10) angelenkt sind.

18. Ablagetisch nach Anspruch 17, dadurch gekennzeichnet, daß die aneinander liegenden Seitenwände (40, 41) benachbarter Ablageplatten (22) mit Bohrungen (61) für Verbindungsschrauben versehen sind.

19. Ablagetisch nach Anspruch 17, dadurch gekennzeichnet, daß die Ablageplatten (22) im Bereich der Anlenkseite der Stützplatten (45) mittels einer in die weiteren Lageraugen (27, 29) eingeschobenen Lagerwelle miteinander verbunden und versteift sind.

20. Ablagetisch zum Befestigen an der Innenseite einer Schaltschranktür eines Schaltschrankes, die zumindest im Bereich ihrer vertikalen Ränder mit Versteifungs- und Montageleisten versehen ist, die in mit Bohrungen versehene Halteleisten auslaufen, nach Anspruch 1, dadurch gekennzeichnet, daß die Lagerelemente (19) für die Lagerwelle (21) bzw. die Lagerbolzen der Ablageplatte(n) (22) an den Halteleisten (14, 15) der Versteifungs- und Montageleisten (12, 13) befestigt sind.

21. Ablagetisch nach einem der Ansprüche 1 bis 20, dadurch gekennzeichnet, daß in die Aufnahmehülsen (28, 30, 35, 37) Arretierungsschrauben eingeschraubt sind, die die einzelnen Lagerbolzen zur Anlenkung der Ablageplatte(n) (22) an der Wand (10) axial und unverdrehbar in den Lageraugen (27, 29, 34, 36) der Ablageplatte(n) (22) festlegen.

**Claims**

1. A support table for fixing to a vertical wall (10) in particular of a switch cabinet, wherein a support plate (22) is mounted pivotably to the wall (10) at holding bars (14, 15) projecting from the wall (10) by means of two bearing pins or a bearing shaft (21) and bearing eyes (34, 36) formed on the support plate (22), wherein pivotally connected in the support plate (22) which is of a box-like configuration and which is open towards the wall (10) are support elements (45) which can be pivoted out from an initial position in which they are pivoted into the support plate (20), into a support position in which they are disposed perpendicularly to the wall and in which they support the inclinedly disposed support plate (22) against the wall (10), and wherein in the initial position the support plate (22) is oriented, with the support elements (45) in the position of being pivoted in, parallel to the wall (10), characterised in that the support elements are in the form of a box-like support flap (45) which, on the side of the support plate (22) which is in opposite relationship to the pivot axis of the support plate (22), is connected for limited pivotal movement to the support plate (22) by means of bearing pins (60) or a bearing shaft and bearing eyes (23, 24 and 55, 56) formed on the support plate (22) and the support flap (45), and that, when the support plate (22) is lifted out of the initial position, the support flap (45), by virtue of its own weight, occupies the support position in which it is perpendicular to the wall.

2. A support table according to claim 1 characterised in that the side walls (39, 40, 41, 44) of the support plate (22) are stiffened by means of longitudinally and transversely directed support walls (31, 43).

3. A support table according to claim 1 or claim 2 characterised in that the side walls (46, 47, 51, 52) of the support flap (45) are stiffened by means of longitudinally and transversely directed support walls (48, 49).

4. A support table according to one of claims 1 to 3 characterised in that the support plate (22) is subdivided into three longitudinal areas by two longitudinally directed support walls (42), that the bearing eyes (23, 24) for the bearing pins (60) or the bearing shaft of the support flap (45) are formed on said longitudinally directed support walls (42) and that aligned bearing bores (25, 26) are provided in the side walls (40, 41) of the support plate (22), said side walls (40, 41) extending parallel to said support walls (42).

5. A support table according to claim 4 characterised in that the support flap (45) is arranged between the two longitudinally directed support walls (42) of the support plate (22) and that the transversely directed support walls (31), between said two longitudinally directed support walls (42), are reduced in height by the thickness of the boxlike support flap (45).

6. A support table according to one of claims 1 to 5 characterised in that the bearing eyes (34, 36) for the bearing shaft (21) or the bearing pins, for pivotally connecting the support plate (22) to the wall (10), are formed immediately adjoining the facing side wall (44), which each extend from the side walls (40, 41) adjoining the pivotal mounting side, only over a portion of the width of the support plate (22).

7. A support table according to one of claims 1 to 6 characterised in that further bearing eyes (27, 29) are also formed at the side of the support plate (22) at which the support flap (45) is pivotally mounted, immediately adjoining the facing side wall (39), which each extend from the side walls (40, 41) adjoining the pivotal mounting side to the facing longitudinally directed support wall (42).

8. A support table according to one of claims 1 to 7 characterised in that receiving sleeves (28, 30, 35, 37) are formed, preferably in the region of the bearing eyes (27, 29, 34, 36), on the facing side walls (39 and 44 respectively), the receiving bores thereof being disposed perpendicularly to the plane of the support plate and receiving resilient buffer elements.

9. A support table according to one of claims 1 to 8 characterised in that preferably a receiving cup (32) with a receiving means (58) for a cup-shaped permanent magnet is formed in the region of the pivotal mounting side of the support flap (45) on the side wall (39) of the support plate (22).

10. A support table according to one of claims 1 to 9 characterised in that the side of the support plate (22) at which the support flap (45) is pivotally mounted has on the top side a projecting contact limb portion (38) which projects with its underside beyond the adjoining side wall (39) as a gripping bar (59).

11. A support table according to one of claims 1 to 10 characterised in that the side of the support plate (22) which can be pivotally mounted to the wall (10) is provided on the top side with support limb portions (57) or support compartments which extend parallel to the pivotal mounting side.

12. A support table according to claim 11 characterised in that bores (58) of different diameters are provided in the region of the support limb portions (57) or support compartments.

13. A support table according to one of claims 1 to 12 characterised in that the bearing eyes (55, 56) of the support flap (45) project slightly at the outward sides of the side walls (46, 47) and extend over a part of the width of the support flap (45).

14. A support table according to one of claims 1 to 13 characterised in that the side wall (51), at the pivotal mounting side of the support flap (45), is so inclined that, when the support flap (45) is pivoted out, it bears in the support position against the underside of the support plate (22) and that the oppositely disposed side wall (52) of the support flap (45) projects above the top side thereof and is in the form of a suitably inclined support plate portion.

15. A support table according to one of claims 1 to 14 characterised in that in the support position the support flap (45) is disposed perpendicularly to the wall (10) and the side wall (52) which is in the form of a support plate portion extends parallel to the wall (10).

16. A support table according to one of claims 1 to 15 characterised in that the side wall (52) of the support flap (45), which is used as the support plate portion, is provided with bores (53, 54) for mounting a resilient buffer plate.

17. A support table according to one of claims 1 to 16 characterised in that a plurality of support plates (22) with support flaps (45) are pivotally mounted to the wall (10) by means of a continuous bearing shaft (21) or individual bearing pins.

18. A support table according to claim 17 characterised in that the side walls (40, 41), which lie against each other, of adjacent support plates (22) are provided with bores (61) for connecting screws.

19. A support table according to claim 17 characterised in that in the region of the pivotal mounting side of the support flaps (45), the support plates (22) are connected together and stiffened by means of a bearing shaft which is in inserted into the further bearing eyes (27, 29).

20. A support table for fixing to the inward side of a door of a switch cabinet, which is provided at least in the region of its vertical edges with stiffening and mounting bars which go into holding bars provided with bores, according to claim 1, characterised in that the bearing elements (19) for the bearing shaft (21) or the bearing pins of the support plate or plates (22) are secured to the holding bars (14, 15) of the stiffening and mounting bars (12, 13).

21. A support table according to one of claims 1 to 20 characterised in that screwed into the receiving sleeves (28, 30, 35, 37) are arresting screws which fix the individual bearing pins for pivotal mounting of the support plate or plates (22) to the wall (10) axially and non-rotatably in the bearing eyes (27, 29, 34, 36) of the support plate or plates (22).

**Revendications**

1. Tablette destinée à être fixée à une paroi verticale (10), notamment d'armoire de commutation, à plateau (22) monté pivotant par rapport à cette paroi (10) sur des barrettes (14, 15) de retenue, qui font saillie de ladite paroi (10), au moyen de deux tourillons ou d'une tige (21) ainsi que de paliers (34, 36) formés sur ce plateau (22), à éléments de soutien (45) qui sont articulés dans ce plateau (22) en caisson, ouvert du côté de la paroi (10) et qui, à partir d'une position initiale dans laquelle ils sont rabattus dans ce plateau, peuvent être déployés à une position de soutien perpendiculaire à la paroi, dans laquelle ils soutiennent sur cette paroi (10) le plateau (22) incliné, et à position initiale dans laquelle le plateau (22) contenant les éléments de soutien (45) rabattus, est orienté parallèlement à la paroi (10), tablette caractérisée en ce que les éléments de soutien ont la conformation d'un support rabattable (45) en forme de caisson, qui est monté sur le plateau (22) du côté de celui-ci opposé à celui de son axe de pivotement, au moyen de tourillons (60) ou d'une tige d'articulation, ainsi que de paliers (23, 24 et 55, 56) de ce plateau (22) et de ce support (45), de façon à pouvoir pivoter d'une amplitude limitée et lorsque le plateau (22) est soulevé de sa position initiale, le support rabattable (45) prend, sous l'effet de son propre poids, une position de soutien perpendiculaire à la paroi (10).

2. Tablette selon la revendication 1, caractérisée en ce que les parois latérales (39, 40, 41, 44) du plateau (22) sont raidies au moyen de parois (31, 43) de soutien, orientées longitudinalement et transversalement.

3. Tablette selon la revendication 1 ou 2, caractérisée en ce que les parois latérales (46, 47 ; 51, 52) du support rabattable (45) sont raidies au moyen de parois (48, 49) de soutien, orientées longitudinalement et transversalement. ·

4. Tablette selon l'une des revendications 1 à 3, caractérisée en ce que le plateau (22) est subdivisé en trois secteurs longitudinaux par deux parois de soutien (42) orientées longitudinalement, les paliers (23, 24) pour les tourillons (60) ou la tige d'articulation du support rabattable (45) sont formés sur ces parois (42) de soutien orientées longitudinalement, et des trous (25, 26) d'articulation, alignés, sont formés dans les parois latérales (40, 41) du plateau (22) qui sont parallèles à ces parois (42) longitudinales de soutien.

5. Tablette selon la revendication 4, caractérisée en ce que le support rabattable (45) est disposé entre les deux parois (42) de soutien, orientées longitudinalement, du plateau (22) et en ce que la hauteur de la paroi (31) de soutien, orientée transversalement, est réduite, entre ces deux parois de soutien orientées longitudinalement, de l'épaisseur du support rabattable (45) en caisson.

6. Tablette selon l'une des revendications 1 à 5, caractérisée en ce que les paliers (34, 36) pour la tige (21) ou les tourillons destinés à articuler le plateau (22) sur la paroi (10) sont formés tout contre la paroi latérale adjacente (44) et se prolongent, à partir des parois latérales (40, 41) qui se raccordent au côté d'articulation, sur une partie seulement de la largeur de ce plateau (22).

7. Tablette selon l'une des revendications 1 à 6, caractérisée en ce que, du côté du plateau (22) sur lequel le support rabattable (45) est articulé, il est formé, tout contre la paroi latérale (39) adjacente, d'autres paliers (27, 29) qui s'étendent, des parois latérales (40, 41) qui se raccordent au côté d'articulation jusqu'à la paroi (42) de soutien adjacente, orientées longitudinalement.

8. Tablette selon l'une des revendications 1 à 7, caractérisée en ce que des douilles (28, 30 ; 35, 37), dont les ouvertures sont perpendiculaires au plan du plateau (22) et logent des éléments amortisseurs élastiques, sont formées avantageusement, près des paliers (27, 29, 34, 36), sur les parois (39, 44) respectivement adjacentes.

9. Tablette selon l'une des revendications 1 à 8, caractérisée en ce qu'une cuvette (32) formant un logement (58) destiné à contenir un aimant permanent en forme de pot ou de cuvette, est formée, avantageusement près du côté d'articulation du support rabattable (45), sur la paroi latérale (39) du plateau (22).

10. Tablette selon l'une des revendications 1 à 9, caractérisée en ce que le côté du plateau (22), sur lequel le support rabattable (45) est articulé, comporte sur le dessus un rebord saillant (38), dont le dessous avance sur la paroi latérale (39) adjacente en formant une poignée (59) de prise.

11. Tablette selon l'une des revendications 1 à 10, caractérisée en ce que le côté du plateau (22), destiné à être articulé sur la paroi (10), comporte sur sa face supérieure des barrettes (57) ou des casiers de rangement, parallèles à ce côté d'articulation.

12. Tablette selon la revendication 11, caractérisée en ce que des trous (58) de différents diamètres sont formés à proximité des barrettes (57) ou casiers de rangement. ·

13. Tablette selon l'une des revendications 1 à 12, caractérisée en ce que les paliers (55, 56) du support rabattable (45) font légèrement saillie des faces extérieures de ses parois latérales (46, 47) et s'étendent sur une partie de la largeur de ce support (45).

14. Tablette selon l'une des revendications 1 à 13, caractérisée en ce que la paroi latérale (51) du côté d'articulation du support rabattable (45) est inclinée de façon à s'appliquer contre la face inférieure du plateau (22) quand ce support (45) se déploie à sa position de soutien, et en ce que la paroi latérale (52) opposée dudit support rabattable (45) fait saillie de la face supérieure de ce dernier et est inclinée de manière à constituer une plaquette d'appui.

15. Tablette selon l'une des revendications 1 à 14, caractérisée en ce que, dans sa position de soutien, le support rabattable (45) est perpendiculaire à la paroi (10) et sa paroi latérale (52), qui forme une plaquette d'appui, est parallèle à cette paroi (10).

16. Tablette selon l'une des revendications 1 à 15, caractérisée en ce que la paroi latérale (52) du support rabattable (45), utilisée comme plaquette d'appui, comporte des trous (53, 54) destinés à fixer une plaquette amortisseuse élastique.

17. Tablette selon l'une des revendications 1 à 16, caractérisée en ce que plusieurs plateaux (22) à supports rabattables (45) sont articulés sur la paroi (10) au moyen d'une même tige (21) continue ou de tourillons individuels.

18. Tablette selon la revendication 17, caractérisée en ce que les parois latérales (40, 41) adjacentes de plateaux (22) juxtaposés comportent des trous (61) pour des vis de liaison.

19. Tablette selon la revendication 17, caractérisée en ce que les plateaux (22) sont reliés et renforcés, du côté d'articulation des supports rabattables (45), au moyen d'une tige insérée dans les autres paliers (27, 29).

20. Tablette selon la revendication 1, destinée à être fixée à la face intérieure de la porte d'une armoire de commutation qui comporte, au moins près de ses bords verticaux, des barres de raidissement et de montage qui se terminent par des barrettes de retenue percées de trous, tablette caractérisée en ce que les paliers (19) de la tige (21) ou des tourillons du ou des plateaux (22) sont fixés à ces barrettes de retenue (14, 15) des barres (12, 13) de raidissement et de montage.

21. Tablette selon l'une des revendications 1 à 20, caractérisée en ce que des vis d'arrêt, vissées dans les douilles (28, 30 ; 35, 37), immobilisent axialement, et en les empêchant de tourner dans les paliers (27, 29 ; 34, 36) du ou des plateaux (22), les tourillons destinés à articuler ce ou ces plateaux (22) sur la paroi (10).

Fig.1

EP 0 121 889 B1

Fig.4

Fig.2

Fig.3

Fig.5

Fig.6

Fig.7

Fig.8

Fig.9